# EUROPEAN PATENT SPECIFICATION

(11) **EP 1 284 248 B1**
(45) Date of publication and mention of the grant of the patent: **13.08.2008**
(21) Application number: 01402127.3
(22) Date of filing: 06.08.2001
(51) Int. Cl.: C04B 14/42, C04B 28/02, E21B 33/138

(54) **Low density, fibre-reinforced cement composition**
Faserverstärkte Zementzusammensetzung mit niedriger Dichte
Composition de ciment de faible densité renforcé par des fibres

(43) Date of publication of application: 19.02.2003
(73) Proprietor: SERVICES PETROLIERS SCHLUMBERGER, 75007 Paris (FR); SCHLUMBERGER HOLDINGS LIMITED, Road Town, Tortola (VG); SCHLUMBERGER TECHNOLOGY B.V., 2514 JG Den Haag (NL); SOFITECH N.V., Uccle (1180 Bruxelles) (BE)
(72) Inventor: Bedel, Jean-Philippe, 91310 Montlhery (FR); Card, Roger, 75015 Paris (FR); Vidick, Benoit, 92160 Antony (FR)
(74) Representative: Hyden, Martin Douglas

(56) References cited:
- WO-A-00/20350
- WO-A-01/09056
- DE-B- 1 239 255
- FR-A- 1 579 736
- US-A- 4 110 225
- US-A- 4 871 395

## Description

The present invention relates to a low-density, fibre-reinforced cement composition, and in particular to such a cement composition for use in cementing oil or gas wells or the like.

When drilling a well such as an oil or gas well, a drilling fluid, often called "mud", is circulated through the drill string and well to remove drilled cuttings from the bottom of the borehole. This fluid also serves to balance the pressure of fluids in the underground formations through which the borehole passes. At any given depth in the well, the pressure exerted on the walls of the borehole by the fluid will depend on the hydrostatic pressure which in turn is dependent on the depth of the well and the density of the fluid. Certain underground formations are highly permeable and if the pressure of fluids in the formation is low, for example because the formation is not very deep or because of fluid depletion for any reason, the situation can arise in which the hydrostatic pressure of the drilling fluid is greater than that of the formation and fluid goes from the borehole into the formation. This situation is known as lost circulation and is undesirable since it is necessary to replace the lost fluid, because the drilling fluid in the formation displaces any hydrocarbon-bearing fluids and prevents useful production (although this is not always the case) and because excessive losses can lead to problems with stuck drill pipe in the borehole. The lost circulation is commonly mitigated by including in the drilling fluid a fluid lost circulation materials. These commonly comprise solid particulate materials that bridge the fractures or holes of the borehole where fluid is lost. prevents further loss of fluid into the formation.

Sometimes the formations are so porous or unstable that it is not possible to use conventional lost circulation materials to drilling fluids or cement to prevent losses. In such situations, one approach to cure serious lost circulation problems has been to place an impermeable cement plug in the borehole adjacent the formation in question through which the borehole is redrilled after the cement has set. While conventional cement slurries can often be used to set a cement plug for lost circulation control, certain problems can arise when the formation is too weak to support the hydrostatic pressure of a conventional cement slurry without problems of fracturing, borehole instability and/or further losses. In such cases, low density cement slurries might be used, an example of which can be found in WO 01/09056. However, low density cement slurries often do not have sufficient strength to support themselves and the borehole while setting takes place.

The addition of fibrous materials to cements for a wide variety of application has been well established. R. F. Zollo (Cement and Concrete Composites, 19, 1997, p107-122) presents an overview of the types of commercially available fibre-reinforced concrete systems and discussions of how various systems work. Since that time a number of inventions have been developed to improve the performance of these materials.

US 5,649,568 (July 22, 1997, W.C. Allen et al. Union Oil Company of California) discloses the use of micro and macro sized glass fibres in a variety of cements including type-G cement widely used in the oil field in order to improve the corrosion resistance of cement liners exposed to corrosive environments. Micro-fibres were defined as those having a diameter of between about 10 microns and 70 microns and an aspect ratio of between 5 and 20 to 1. Macro fibres were defined as those having a diameter between about 10 and 200 microns and an aspect ratio preferably greater than 100. Glass was the preferred material. Usage was in the range of 1.5 to 10% by weight based on the weight of the total solids. Preferred compositions also included 5 to 50% silica flour by weight based on the total weight of solid materials.

Glass fibre-reinforced oil field cement systems have been commercially available since at least 1999. These systems typically contain less than 1% fibre by weight based on the weight of cement and typically are in the medium density range of around 12 pounds per gallon of cement slurry. These cost effective systems have been used mainly for lost circulation control applications.

US 5,705,233 (January 6, 1998, F. S. Denes et al. Wisconsin Alumni Research Foundation) teaches that the types of glass fibre composites described above are sensitive to age and curing under alkali conditions routinely found in cement. Even composites using alkali resistant glass fibres become brittle after prolonged storage in the presence of atmospheric moisture or in liquid water environments. They then developed a process to modify the surface of polyolefin fibres to increase compatibility of this surface and cement. This results in improved bonding and resulting composite performance. The treated fibres are preferably used at a level of less than 1% by volume or about 0.5% by weight.

This general concept has been adapted for oil field use in lightweight cements, especially foamed cements, by Chatterji et al. in US 6,220,354 (April 24, 2001, J. Chatterji et al., Halliburton). This patent teaches that fibres formed of polyesters, polyamides and glass suffer from the disadvantage that they degrade in the presence of hydrated lime. These inventors prefer to use polyolefin fibres treated with a surface active agent capable of rendering the fibre surface hydrophilic. Fibrillated net-shaped fibres appear to be preferred and are used in ranges of 0.1 to 0.25 weight percent based on the weight of cement. These systems suffer from low compressive strength, typically less than about 1500 psi, and high porosity. This makes them less than idea as a means to control lost circulation situations.

US 4,871,395 discloses high temperature lightweight foamed cements, but does not discloses the porosity of the cement and the composition of the cement of the present invention.

DE 1 239 255 discloses a cement comprising fibers with a length between 6 to 130 mm, a diameter between 0.025 to 5 mm in an amount of 0.1 to 5.0% by weight of cement (column 1, lines 27-31).

US 6,060,163 (May 9, 2000, A. Naaman, The Regents of the University of Michigan) discusses the optimisation of fibre geometry for maximum effectiveness.

Thus, while a large number of different fibre reinforced cement systems have been developed for a number of different applications, current teaching indicates that polyolefin fibres which have been modified to increase the hydrophilicity of the surface are strongly preferred, especially for light weight cement systems.

The use of fibres in a low-density cement slurry for lost circulation control is discussed in Elmonein, Zaki and Al-Arda, "Cementing the deepest 20 inch Casing in Abu Dhabi using a combination of Novel Light Weight Slurry and Fiber" ADIPEC-0940, 9^{th} Abu Dhabi International Petroleum Exhibition and Conference, Abu Dhabi, U.A.E. 15 - 18 October 2000.

One object of the invention is to provide a reinforced low-density cement slurry that can be mixed and pumped under conventional oil field conditions yet rapidly develops sufficient structure down hole to seal the well bore and prevent further fluid losses.

The present invention provides a fibre-reinforced, low density cement system for the control of lost circulation during the drilling of subterranean wells, generally comprising a cement particle mixture having a specific granulometric characterization and alkaline resistant fibres, such as fibres composed of glass having a high zirconia concentration or organic fibres composed of a phenolic polymer or other polymeric system.

The invention also provides a reinforced cement slurry with low permeability, low porosity, low erodability and high strength for the length of time and under the conditions encountered in lost circulation situation.

A further aspect of the invention provides a continuous fibre network which is used to confine and additionally stabilize cement plugs used to control lost circulation situations.

A slurry according to the invention has a density of 0.9g/cm³ to 1.3g/cm³, and is constituted by a solid fraction and a liquid fraction, has a porosity (volume ratio of liquid fraction over solid fraction)of 38% to 50%, the solid fraction comprising :
60% to 90% (by volume) of lightweight particles having a mean size of 20 microns (µm) to 350µm;
10% to 30% (by volume) of micro-cement having a mean particle diameter of 0.5µm to 5µm;
0% to 20% (by volume) of Portland cement, having particles with a mean diameter of 20µm to 50µm;
0% to 30% (by volume) of gypsum; and
at least one alkali-resistant fibre present in an amount of less than 2% (by weight) and having a length of less than 6cm and an aspect ratio of greater than 10.

The inclusion of the alkali-resistant fibres allows a high mechanical strength and improved resistance to erosion of set cement without the problems of fibre degradation previously encountered in cement systems.

The term "fibre" used in relation to the present invention also includes ribbon or platelet structures that accomplish the same performance as normal fibre structures. Such materials may include a number of different materials: polymers, natural structures (ground plant fibres), but all have alkaline resistance, aspect ratio and size limits indicated above. The fibres can have various shapes, for example multi-lobed, curved, hooked, tapered, dumbbell. Where the fibre has a complex structure, only the exterior of the fibre needs to be alkaline resistant. Core-and-shell fibres can be used that are coated with an alkaline resistant material before use.

Preferably the cement slurry has porosity of less than 45%.

The lightweight particles typically have a density of less than 2g/cm³, and preferably less than 0.8g/cm³. These can be selected from hollow microspheres, in particular silico-aluminate microspheres or cenospheres, synthetic materials such as hollow glass beads, and more particularly beads of sodium-calcium-borosilicate glass, ceramic microspheres, e.g. of the silica-alumina type, or beads of plastics material such as polypropylene beads.

One or more additives, such as dispersants, antifreeze, water retainers, cement setting accelerators or retarders, and foam stabilizers can be added to the slurry.

In one embodiment, the solid fraction of the slurry is preferably constituted by lightweight particles of diameter 100µm to 350µm and by particles of micro-cement, the ratio of lightweight particles to micro-cement being 70:30 to 85:15. The solid fraction of the mixture can also be constituted by 50% to 60% (by volume) of first lightweight particles having a mean diameter of 100µm to 400µm, by 30% to 45% of second lightweight particles having a mean diameter of 20µm to 40µm, and by 5% to 20% of micro-cement.

The fibres used in the present invention preferably have a length of 2 mm to 6 cm and diameters of 6 microns to 200 microns. The material from which the fibre is made can vary but must be alkali-resistant and compatible generally with aqueous cement slurries. Examples of such fibres are high-zirconia fibres and phenolic polymer fibres.

A typical slurry falling within the scope of the invention can comprise silico alumina microspheres (50 to 60% by volume of blend), microcement (10 to 20% by volume of blend) and fine silicoalumina microspheres (0 to 30% by volume of blend). The fibres would be added to that slurry at a concentration of 0.5 to 1.5 pounds of fibre per barrel of slurry. The fibres are added to the slurry once the slurry mixed.

Alternatives are :
Cenospheres : 55% by volume of blend
Finer cenospheres : 30% by volume of blend
Microcement : 15% by volume of blend
Fibres : 0.5 pounds per bbl
or :
Censopheres : 50% by volume of blend
Cement: 40% by volume of blend
Flyash : 10% by volume of blend.

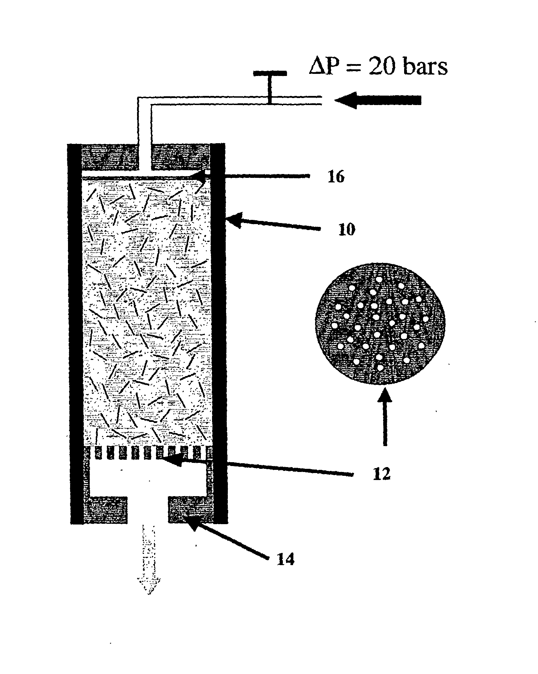

The accompanying drawing shows a schematic view of an experimental test set-up used to test slurries according to the invention.

The test set-up has been created to test the efficiency of several fibre types in plugging different size holes from 1mm to 4 mm. The set-up is based on a standard high temperature fluid loss cell 10, which is fitted with an inside grid 12. The grid substitutes the usual filtration area and it is placed at 20 mm above the bottom 14 of the cell as it is depicted on the figure. The grid 12 is made with holes and three different grids are available. The first grid is made with 100 holes of 1mm diameter which gives a total void space of 0.78 cm². The two others are respectively with 100 holes of 2mm diameter and with 25 holes of 4mm diameter, the both leads to a total void space of 3.14 cm². The bottom cap 14 of the cell is open with a 1.1cm diameter hole.

The test is run as a fluid loss test. 385 ml of slurry are placed inside the cell above the grid. A metal plate 16 is placed on the top of the slurry. A pressure of 20 bars is applied for 30 minutes and the amount of slurry coming out through the grid is measured. The pressure can be applied progressively or instantaneously from 0 to 20 bars. The plugging efficiency is evaluated with the quantity of slurry collected after 30 minutes, as well the speed of plugging the grid. The tests have been performed at room temperature.

This set-up allows to see the efficiency of the different fibers tested in plugging the different hole sizes, according to their type : material, shape and length, and to their concentration used in the slurry.

The efficacy and scope of the invention is demonstrated in the tests described below.

### Slurries

Two slurries are used to demonstrate the invention: a standard cement slurry having a density of 15.8 ppg (Std.), and a low-density slurry having a specific granulometric characterisation and density of 12.24 ppg (LC) as described in WO 01/09056.

### Fibres

Five types of fibres (A - E) are used as follows:
A: polyamide fibres around 18 µm in diameter, from 3 mm to 18 mm long, with a density of 1 g/cm³;
B: fibrous glass fibres around 20 µm in diameter, from 10mm to 14 mm long (average 12 mm), with a density of 2.55 g/cm³;
C: novoloid fibres around 21 µm in diameter, from 18 mm to 22 mm long, with a density of 1.27 g/cm³;
D: polypropylene fibres around 0.7 µm in diameter, from 11mm to 13 mm long, with a density of 0.9 g/cm³; and
E: polyester fibres around 13 µm in diameter, from 4 mm to 8 mm long.

The table below shows the results obtained using fibres A - E with Std. and LC slurries

| Grid Holes Diameter (mm) | Slurry | Fibre Type | Fibre Concentration in kg/m3 | Collected Slurry in ml (0 to 20 bars prog) | Collected Slurry in ml (0 to 20 bars instant) |
|---|---|---|---|---|---|
| 1 | Std | none | - | All | All |
| 1 | Std | C | 9.7 | 17 | - |
| 1 | Std | B | 19.2 | 125.5 | - |
| 1 | Std | D | 13 | 130 | - |
| 1 | LC | none | - | All | All |
| 1 | LC | C | 9.7 | 4.4 | - |
| 1 | LC | B | 19.2 | 4 | - |
| 1 | LC | D | 13 | 10.2 | - |
| | | | | | |
| 2 | Std | A 6mm | 13 | 6.9 | 26.9 |
| 2 | Std | A 12mm | 13 | 28.2 | 31.7 |
| 2 | LC | A 6mm | 13 | 2 | 2.5 |
| 2 | LC | A 12mm | 13 | - | 0.9 |
| | | | | | |
| 4 | Std | A 12mm | 19.5 | All | All |
| 4 | Std | A 18mm | 26 | 26.1 | 23 |
| 4 | LC | A 12mm | 16.5 | 0.2 | - |
| 4 | LC | A 18mm | 16.5 | 0.8 | 1.3 |
| | | | | | |
| 6 | LC | A 18mm | 16.5 | 0.5 | All |

All of the fibres plug the 1 mm grid with the LC and Std slurries, but with the LC slurry they are much more efficient. For larger holes 2mm and 4mm, the A fibres work well in plugging the holes and preventing the slurry from passing through the grid, again, far more efficiently with the LC slurry than with a Std slurry and at a lower concentration of fibres.

Fibre E work as well in 1mm and 2mm grid but the efficiency is usually lower than that of Fibre A

The efficiency of the A fibres increases with their concentration.

It is clear that the length of the fibres plays an important role according to the size of the holes to be plugged. The longer fibres are able to plug larger hole. The 12mm and 18mm A fibres plug the 4mm holes whereas the 6mm A fibres does not.

The plugging of the holes is better when the fibres have a longer time to bridge the holes, it is assessed by comparing the results when the pressure is applied progressively and instantaneously. In the case of C fibres, there is no plugging when the pressure is applied instantaneously.

The combination of A fibres and a LC slurry is more efficient than with a standard slurry the plugging is faster and less slurry goes through the grid. Furthermore a lower fibre concentration can be used. This phenomenon is due to the particles size distribution of the LC slurry and the interaction between the slurry particles and the fibres.

## Claims

1. A cement slurry having a density of 0.9g/cm³ to 1.3g/cm³, and comprising a solid fraction and a liquid fraction with a porosity (ratio of liquid fraction volume over total volume) of 38% to 50%, the solid fraction comprising :
60% to 90% (by volume) of lightweight particles having a mean size of 20 microns (µm) to 350µm;
10% to 30% (by volume) of micro-cement having a mean particle diameter of 0.5µm to 5µm;
0% to 20% (by volume) of Portland cement, having particles with a mean diameter of 20µm to 50µm;
0% to 30% (by volume) of gypsum; and
at least one alkali-resistant fibre present in an amount of less than 2% (by weight) and having a length of less than 6cm and an aspect ratio of greater than 10.

2. A cement slurry as claimed in claim 1, wherein the fibres comprise glass having a high zirconia concentration or organic fibres composed of a phenolic polymer or other polymeric system.

3. A cement slurry as claimed in claim 1 or 2, wherein the porosity is less than 45%.

4. A cement slurry as claimed in claim 1, 2 or 3, wherein the lightweight particles have a density of less than 2g/cm³.

5. A cement slurry as claimed in claim 4, wherein the lightweight particles have a density of less than 0.8g/cm³.

6. A cement slurry as claimed in any preceding claim, wherein the lightweight material is selected from hollow microspheres, synthetic materials, ceramic microspheres, or beads of plastics material.

7. A cement slurry as claimed in any preceding claim, further comprising one or more additives including dispersants, antifreeze, water retainers, cement setting accelerators or retarders, and foam stabilizers.

8. A cement slurry as claimed in any preceding claim, wherein the fibres have a length of 2 mm to 6 cm and diameters of 6 microns to 200 microns.

9. A cement slurry as claimed in any preceding claim, wherein the fibres are added to the slurry at a concentration of 1.4 mg/cm³ to 4.3 mg/cm³ of fibre.

10. A method of controlling lost circulation in a well being drilled, comprising placing, adjacent a zone of lost circulation, a plug of a fibre-reinforced, low density cement system for the control of lost circulation during the drilling of subterranean wells, generally comprising a cement slurry having a density of 0.9g/cm³ to 1.3g/cm³, and comprising a solid fraction and a liquid fraction with a porosity (ratio of liquid fraction volume over total volume) of 38% to 50%, the solid fraction comprising :
60% to 90% (by volume) of lightweight particles having a mean size of 20 microns (µm) to 350µm;
10% to 30% (by volume) of micro-cement having a mean particle diameter of 0.5µm to 5µm;
0% to 20% (by volume) of Portland cement, having particles with a mean diameter of 20µm to 50µm;
0% to 30% (by volume) of gypsum; and
at least one alkali-resistant fibre present in an amount of less than 2% (by weight) and having a length of less than 6cm and an aspect ratio of greater than 10.

## Patentansprüche

1. Zementschlamm, der eine Dichte von 0,9 g/cm³ bis 1,3 g/cm³ besitzt und einen Festkörperanteil und einen Flüssigkeitsanteil mit einer Porosität (Verhältnis des Volumens des Flüssigkeitsanteils zum Gesamtvolumen) von 38 % bis 50 % enthält, wobei der Festkörperanteil umfasst:
60 % bis 90 % (dem Volumen nach) leichter Partikel mit einer mittleren Größe von 20 Mikrometer (µm) bis 350 µm;
10 % bis 30 % (dem Volumen nach) Mikrozement mit einem mittleren Partikeldurchmesser von 0,5 µm bis 5 µm;
0 % bis 20 % (dem Volumen nach) Portland-Zement, der Partikel besitzt, deren mittlerer Durchmesser im Bereich von 20 µm bis 50 µm liegt;
0 % bis 30 % (dem Volumen nach) Gips; und
wenigstens eine alkalibeständige Faser, die in einer Menge von weniger als 2 % (dem Gewicht nach) vorhanden ist und eine Länge von weniger als 6 cm und ein Verhältnis Länge/Breite von mehr als 10 hat.

2. Zementschlamm nach Anspruch 1, wobei die Fasern Glas, das eine hohe Zirkonoxidkonzentration besitzt, oder organische Fasern, die aus einem Phenolpolymer oder aus einem anderen Polymersystem zusammengesetzt sind, enthalten.

3. Zementschlamm nach Anspruch 1 oder 2, wobei die Porosität geringer als 45 % ist.

4. Zementschlamm nach Anspruch 1, 2 oder 3, wobei die leichten Partikel eine Dichte von weniger als 2 g/cm³ haben.

5. Zementschlamm nach Anspruch 4, wobei die leichten Partikel eine Dichte von weniger als 0,8 g/cm³ haben.

6. Zementschlamm nach einem vorhergehenden Anspruch, wobei das leichte Material ausgewählt ist aus hohlen Mikrokugeln, synthetischen Materialien, keramischen Mikrokugeln oder Kunststoffperlen.

7. Zementschlamm nach einem vorhergehenden Anspruch, der ferner ein oder mehrere Additive enthält, die Dispergiermittel, Gefrierschutzmittel, Wasserrückhalter, Zementaushärtungsbeschleuniger oder -verzögerer und Schaumstabilisierer umfassen.

8. Zementschlamm nach einem vorhergehenden Anspruch, wobei die Fasern eine Länge im Bereich von 2 mm bis 6 cm und Durchmesser im Bereich von 6 Mikrometer bis 200 Mikrometer haben.

9. Zementschlamm nach einem vorhergehenden Anspruch, wobei die Fasern zu dem Schlamm in einer Konzentration von 1,4 mg/cm³ bis 4,3 mg/cm³ an Fasern hinzugefügt sind.

10. Verfahren zum Steuern einer Leerzirkulation in einem momentan gebohrten Bohrloch, das umfasst: Anordnen eines Stopfens aus einem faserverstärkten Zementsystem mit geringer Dichte benachbart zu einer Leerzirkulationszone, um die Leerzirkulation während des Bohrens unterirdischer Bohrlöcher zu steuern, wobei das System im Allgemeinen einen Zementschlamm mit einer Dichte im Bereich von 0,9g/cm³ bis 1,3 g/cm³ hat und einen Festkörperanteil und einen Flüssigkeitsanteil mit einer Porosität (Verhältnis des Volumens des Flüssigkeitsanteils zum Gesamtvolumen) von 38 % bis 50 % enthält, wobei der Festkörperanteil umfasst:
60 % bis 90 % (dem Volumen nach) leichte Partikel mit einer mittleren Größe von 20 Mikrometer (µm) bis 350 µm;
10 % bis 30 % (dem Volumen nach) Mikrozement mit einem mittleren Partikeldurchmesser von 0,5 µm bis 5 µm;
0 % bis 20 % (dem Volumen nach) Portland-Zement mit Partikeln, die einen mittleren Durchmesser im Bereich von 20 µm bis 50 µm haben;
0 % bis 30 % (dem Volumen nach) Gips; und
wenigstens eine alkalibeständige Faser, die in einer Menge von weniger als 2 % (dem Gewicht nach) vorhanden ist und eine Länge von weniger als 6 cm und ein Verhältnis Länge/Breite von mehr als 10 besitzt.

## Revendications

1. Suspension de ciment ayant une densité de 0,9 g/cm³ à 1,3 g/cm³, et comprenant une fraction solide et une fraction liquide ayant une porosité (rapport du volume de la fraction liquide sur le volume total) de 38% à 50%, la fraction solide comprenant :
60% à 90% (en volume) de particules légères ayant une taille moyenne de 20 micromètres (µm) à 350 µm ;
10% à 30% (en volume) de micro-ciment ayant un diamètre moyen de particules de 0,5 µm à 5 µm ;
0% à 20% (en volume) de ciment Portland, ayant des particules ayant un diamètre moyen de 20 µm à 50 µm ;
0% à 30% (en volume) de gypse ; et
au moins une fibre résistante aux alcalis, présente en une quantité inférieure à 2% (en poids) et ayant une longueur inférieure à 6 cm et un rapport de longueur supérieur à 10.

2. Suspension de ciment selon la revendication 1, dans laquelle les fibres comprennent un verre ayant une haute concentration en zircone ou des fibres organiques composées d'un polymère phénolique ou d'un autre système polymère.

3. Suspension de ciment selon la revendication 1 ou 2, dans laquelle la porosité est inférieure à 45%.

4. Suspension de ciment selon la revendication 1, 2 ou 3, dans laquelle les particules légères ont une masse volumique inférieure à 2 g/cm³.

5. Suspension de ciment selon la revendication 4, dans laquelle les particules légères ont une masse volumique inférieure à 0,8 g/cm³.

6. Suspension de ciment selon l'une quelconque des revendications précédentes, dans laquelle la matière légère est choisie parmi les microsphères creuses, les matériaux synthétiques, les microsphères céramiques ou des billes de matière plastique.

7. Suspension de ciment selon l'une quelconque des revendications précédentes, comprenant en outre un ou plusieurs additifs incluant des dispersants, un antigel, des agents de rétention d'eau, des accélérateurs ou retardateurs de la prise du ciment, et des stabilisateurs de mousse.

8. Suspension de ciment selon l'une quelconque des revendications précédentes, dans laquelle les fibres ont une longueur de 2 mm à 6 cm et des diamètres de 6 micromètres à 200 micromètres.

9. Suspension de ciment selon l'une quelconque des revendications précédentes, dans laquelle les fibres sont ajoutées à la suspension à une concentration de 1,4 mg/cm³ à 4,3 mg/cm³ de fibre.

10. Procédé de contrôle de la perte de circulation perdue dans un puits en cours de forage, comprenant le placement, de façon adjacente à une zone de perte de circulation, d'un bouchon d'un système de ciment à faible masse volumique, renforcé par des fibres, pour le contrôle de la perte de circulation pendant le forage de puits souterrains, comprenant généralement une suspension de ciment ayant une masse volumique de 0,9 g/cm³ à 1,3 g/cm³, et comprenant une fraction solide et une fraction liquide ayant une porosité (rapport du volume de la fraction liquide sur le volume total) de 38% à 50%, la fraction solide comprenant :
60% à 90% (en volume) de particules légères ayant une taille moyenne de 20 micromètres (µm) à 350 µm ;
10% à 30% (en volume) de micro-ciment ayant un diamètre moyen de particules de 0,5 µm à 5 µm ;
0% à 20% (en volume) de ciment Portland, ayant des particules ayant un diamètre moyen de 20 µm à 50 µm ;
0% à 30% (en volume) de gypse ; et
au moins une fibre résistante aux alcalis, présente en une quantité inférieure à 2% (en poids) et ayant une longueur inférieure à 6 cm et un rapport de longueur supérieur à 10.
